# EUROPEAN PATENT SPECIFICATION

(11) **EP 3 374 576 B1**
(45) Date of publication and mention of the grant of the patent: **09.09.2020**
(21) Application number: 16805512.7
(22) Date of filing: 14.11.2016
(51) Int. Cl.: E04B 1/94, E04C 2/16, E04C 2/24

(54) **FIRE RESISTANT COMPOSITE MAT**
FEUERFESTE VERBUNDMATTE
MAT COMPOSITE IGNIFUGE

(30) Priority: 13.11.2015 US 201562255003 P
(43) Date of publication of application: 19.09.2018
(73) Proprietor: BASF SE, 67056 Ludwigshafen (DE)
(72) Inventor: NICHOLAS, Karl Richard, Aurora, Illinois 60506 (US); NORTON, John C., Indian Trail, North Carolina 28079 (US); BALTHES, Garry, Elkart, Indiana 46514 (US); GETTY, Patrick, Crown Point, Indiana 46307 (US)
(74) Representative: Altmann Stößel Dick Patentanwälte PartG mbB
(86) International application number: PCT/IB2016/056845
(87) International publication number: WO 2017/081672

(56) References cited:
- WO-A1-02/02886
- WO-A1-2007/016746
- WO-A1-2014/153053
- US-A- 5 705 001
- US-A1- 2013 209 723
- US-A1- 2015 240 492

## Description

### FIELD OF THE DISCLOSURE

This disclosure relates to fire resistant composite mats, and more particularly to composite mats that include a binder and fire resistant additive, and to sandwich constructions comprising the composite mat.

### BACKGROUND OF THE DISCLOSURE

Prefabricated sandwich constructions are employed in a variety of different settings, including walls and panels for mobile homes, vehicles and various freestanding structures. These sandwich constructions often contain fiberglass reinforced plastics and/or plywood for rigidity. These walls are heavy, prone to water damage, and can emit formaldehyde. There remains a need for light weight, strong and VOC (volatile organic compound) free wall and panel construction to replace existing prefabricated walls and panels. WO 2014/153053 discloses a sandwich wall construction for mobile homes that have a cellular core containing a foam made of polyurethane, polyisocyanate, or a mixture of the two. The wall further contains a fiber mat adjacent to the core, a thermoplastic polymer film adjacent to the fiber mat, and a clear cured coat covering the thermoplastic film.

US 5705001 discloses a composite mat comprising wood fibers, a crude methylene diphenyl diisocyanate/phenol resin, and a flame retardant.

There is a need for light weight sandwich constructions with high strength and good flame resistance.

### SUMMARY OF THE DISCLOSURE

This disclosure relates to a composite mat which contains at least one fiber, a polymeric binder, and a fire resistant additive as defined in any one of claims 1 to 12.The fibers are woven, or non-woven, The fibers can be natural fibers, synthetic fibers, and mixtures thereof. The fibers are cellulosic materials. Suitable natural fibers can include bast fibers, cotton fibers, wood fibers, leaf fibers, fruit fibers, animal fibers and mixtures thereof. Exemplary fibers include, but are not limited to, kenaf, flax, hemp, jute, rayon, sisal, caroa, banana, coconut, wool, rye, wheat, rice, sugar cane, bamboo, and mixtures thereof.

The fibers can be a synthetic fiber, such as carbon fibers, polyethylenes, polyesters, polyamides, phenol-formaldehydes, polyvinyl chlorides, polyurethanes, and mixtures thereof. An exemplary synthetic fiber is polyethylene terephthalate. For embodiments in which the fiber is a blend of natural and synthetic fibers, the synthetic fibers can be present in an amount that is 0.1-75%, 5-50%, 10-40%, 15-40%, 20-40%, 20-35%, 25-35%, or 30% by weight relative to the total weight of the fibers.

The fire resistant additive can be an organophosphorus compound, a borate salt, a melamine compound, an aluminum compound, and antimony compound, a halogen, or a mixture thereof. Suitable organophosphorus compounds include, but are not limited to, tetrakis hydroxymethyl phosphonium salt/urea condensate, a cyclic phosphonate, and mixtures thereof. Suitable borate salts include, but are not limited to, sodium borate, zinc borate, ammonium borate, boric oxide, and mixtures thereof. Suitable melamine compounds include, but are not limited to, melamine phosphate, melamine polyphosphate, melamine pyrophosphate, melamine, melamine cyanurate, melamine borate, and mixtures thereof. Suitable aluminum compounds include alumina trihydroxide. In certain cases, the fire resistant additive can be a mixture of a borate salt and an organophosphorus compound. The fire resistant additive is be present in an amount from 0.1-75%, 1-50%, 1-40%, 1-30%, 5-30%, 5-25%, 5-20%, 5-15%, 5-10%, 7.5-15%, 7.5-20% or 10-20% by weight relative to the total weight of the composite mat.

The binder can be a pure acrylic copolymer, a styrene acrylic copolymer, or a vinyl acrylic copolymer. The binder can be present in an amount from 0.1-75%, 5-75%, 5-50%, 10-50%, or 15-50% by weight dry binder relative to the total weight of the composite mat.

The composite mat is be prepared by obtaining a blend of binder and fire resistant additive, and then applying the blend to fiber. The blend can be applied either as a laminate layer on the fiber, or can be dispersed partially or completely throughout the fibers. Suitable methods for applying the blend include spraying, curtain coating, dip and squeeze, foulard (i.e., the use of foam without pressure), and foaming under pressure.

The composite mat can be used as a component in a sandwich construction, as defined in any one of claims 13 to 15. A composite mat, as defined in any one of claims 1 to 12, is present on both planar sides, the mat can be the same or different. The sandwich construction can further contain a thermoplastic polymer film, a clear coat, or both. Both, or only one, of the planar sides may be covered by either the thermoplastic film, clear coat or both. When both planar sides care covered by a thermoplastic polymer film, the thermoplastic polymer film can be the same or different on each side. When both planar sides care covered by a clear coat, the clear coat can be the same or different on each side.

The planar core of the sandwich construction can be made any suitable material, such as a cellulosic material. The cellulosic material can include, but is not limited to, bast fibers, wood fibers, seed fibers, leaf fibers, fruit fibers, animal fibers and mixtures thereof. Suitable cellulosic materials include, but are not limited to, kenaf, flax, hemp, jute, cotton, rayon, sisal, caroa, banana, coconut, wool and mixtures thereof.

The sandwich construction can be characterized, in some embodiments, by the absence of formaldehyde, styrene, or both. The sandwich construction can be characterized, in some embodiments, by the absence an adhesive layer between any of the components of the sandwich constructions, for instance, between the planar core and the composite mats, between the composite mat and thermoplastic polymer film, between the thermoplastic polymer film and cured clear coat, between the planar core and the thermoplastic polymer film, between the composite mat and cured clear coat, or between the planar core and cured clear coat.

### BRIEF DESCRIPTION OF THE DRAWINGS

The accompanying drawings, which are incorporated in and constitute a part of this specification, illustrate several embodiments of the disclosure and together with the description, serve to explain the principles of the disclosure.

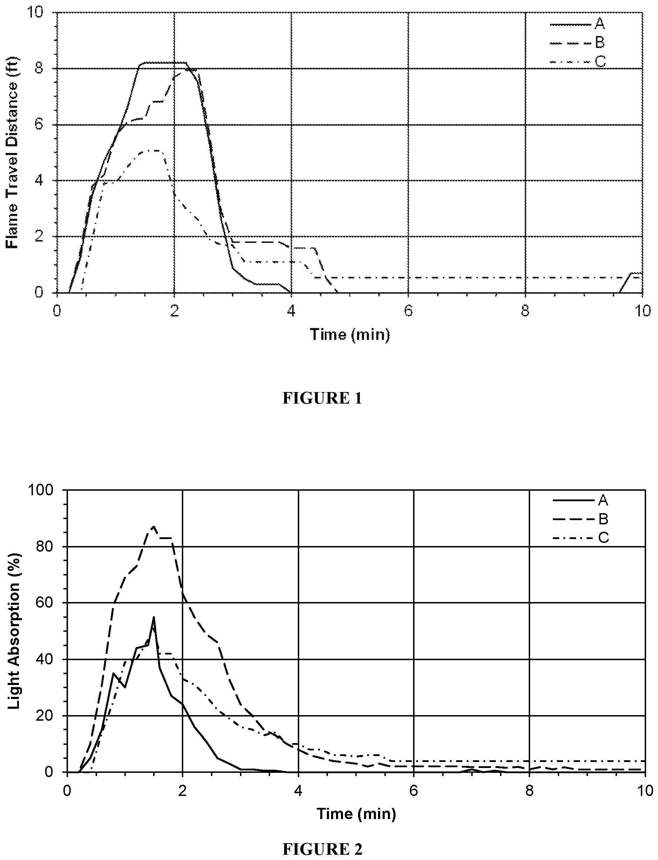

**Figure 1** depicts the flame spread index for composite mats determined by Steiner Tunnel Flame Testing. Flame travel distance (ft) is depicted on the y-axis and time (min) is depicted on the x-axis.
**Figure 2** depicts the smoke developed index for composite mats determined by Steiner Tunnel Flame Testing. Light absorption (%) is depicted on the y-axis and time (min) is depicted on the x-axis.

### DESCRIPTION OF THE DISCLOSURE

Disclosed herein are flame resistant composite mats that can be employed as components of a sandwich wall or panel construction. The mat can be overlaid the core material of the sandwich construction. Because the mat is flame resistant, the mat reduces or prevents combustion of the core material, and thereby permits the use of cellulosic materials.

The composite mats contain at least one fiber, a binder, and a fire resistant additive. The fiber can include one or more natural fibers, one or more synthetic fibers, or mixtures thereof. Suitable natural fibers include, but are not limited to, bast fibers such as kenaf, flax, hemp, and jute; wood fibers, including rayon; cotton fibers; lead fibers such as sisal, caroa, and banana; fruit fibers such a coconut; and animal fibers such as wool. The fibers can also include rye, wheat, rice, sugar cane, or bamboo. The fibers include cellulosic fibers. are The fibers are woven or non-woven.

The fiber can also include synthetic fibers, such as carbon fibers, polyethylene fibers, polyester fibers, polyamide fibers, phenol-formaldehyde fibers, polyvinyl chloride fibers, and polyurethane fibers. In certain embodiments in which the fiber is a blend of natural and synthetic fibers, the synthetic fibers can be present in an amount that is 0.1-75%, 5-50%, 10-40%, 15-40%, 20-40%, 20-35%, 25-35%, or about 30% by weight relative to the total weight of the fibers.

In certain embodiments, the fiber includes bast fiber or a mixture of a bast fiber and polyester. In such mixtures, the bast fiber can be kenaf and the polyester can be polyethylene terephthalate (PET). In some embodiments, the mat includes non-woven bast fibers.

The composite fiber contains at least one fire resistant additive. Suitable additives include organophosphorus compounds, boric acids and borate salts, melamine compounds, and metal hydroxides, such as aluminum trihydroxide and magnesium trihydroxide. Exemplary organophorphorous compounds include tetrakis hydroxymethyl phosphonium salt/urea condensate, and cyclic phosphonate. Exemplary boric acid and borate salts include sodium borate, zinc borate, ammonium borate and boric oxide. Exemplary melamine compounds include melamine phosphate, melamine polyphosphate, melamine pyrophosphate, melamine, melamine cyanurate, and melamine borate. Mixtures of two or more fire resistant additives, either from the same or different chemical class, can also be present in the composite mat. The fire resistant additive is present in an amount that is from 0.1-75%, 1-50%, 1-40%, 1-30%, 5-30%, 5-25%, 5-20%, 5-15%, 5-10%, 7.5-15%, 7.5-20% or 10-20% by weight relative to the total weight of the composite mat.

The composite mat contains a polymeric binder. The binder can include a pure acrylic polymer, a styrene acrylic copolymer, a styrene butadiene copolymer, a vinyl acrylic copolymer, a vinyl acetate polymer, or a vinyl acetate ethylene copolymer. Unsaturated monomers for use in forming the binder are α,β-monoethylenically unsaturated mono- and dicarboxylic acids (e.g. acrylic acid, methacrylic acid, crotonic acid, dimethacrylic acid, ethylacrylic acid, allylacetic acid, vinylacetic acid maleic acid, fumaric acid, itaconic acid, mesaconic acid, methylenemalonic acid, and citraconic acid-maleic anhydride, itaconic anhydride, and methylmalonic anhydride); esters of α,β-monoethylenically unsaturated mono- and dicarboxylic acids having 3 to 6 carbon atoms with alkanols having 1 to 12 carbon atoms (e.g. esters of acrylic acid, methacrylic acid, maleic acid, fumaric acid, or itaconic acid, with C1-C12, C1-C8, or C1-C4 alkanols such as ethyl, n-butyl, isobutyl and 2-ethylhexyl acrylates and methacrylates, dimethyl maleate and n-butyl maleate); acrylamides and alkyl-substituted acrylamides (e.g. (meth)acrylamide, N-tert-butylacrylamide, and N-methyl(meth)acrylamide); (meth)acrylonitrile; vinyl and vinylidene halides (e.g. vinyl chloride and vinylidene chloride); vinyl esters of C1-C18 mono- or dicarboxylic acids (e.g. vinyl acetate, vinyl propionate, vinyl n-butyrate, vinyl laurate and vinyl stearate); C1-C4 hydroxyalkyl esters of C3-C6 mono- or dicarboxylic acids, especially of acrylic acid, methacrylic acid or maleic acid, or their derivatives alkoxylated with from 2 to 50 moles of ethylene oxide, propylene oxide, butylene oxide or mixtures thereof, or esters of these acids with C1-C18 alcohols alkoxylated with from 2 to 50 mol of ethylene oxide, propylene oxide, butylene oxide or mixtures thereof (e.g. hydroxyethyl (meth)acrylate, hydroxypropyl (meth)acrylate, and methylpolyglycol acrylate); and monomers containing glycidyl groups (e.g. glycidyl methacrylate, which can optionnaly be used).

Exemplary α,β-monoethylenically unsaturated mono- and dicarboxylic acids and esters thereof include, but are not limited to, (meth)acrylic acid, 2-hydroxyethyl(meth)acrylate, 2-hydroxypropyl(meth)acrylate, 2-hydroxybutyl(meth)acrylate, methyl(meth)acrylate, ethyl(meth)acrylate, propyl(meth)acrylate, isopropyl(meth)acrylate, butyl(meth)acrylate, amyl(meth)acrylate, isobutyl(meth)acrylate, t-butyl(meth)acrylate, pentyl(meth)acrylate, isoamyl(meth)acrylate, hexyl(meth)acrylate, heptyl(meth)acrylate, octyl(meth)acrylate, isooctyl(meth)acrylate, 2-ethylhexyl(meth)acrylate, nonyl(meth)acrylate, decyl(meth)acrylate, isodecyl(meth)acrylate, undecyl(meth)acrylate, dodecyl(meth)acrylate, lauryl(meth)acrylate, octadecyl(meth)acrylate, stearyl(meth)acrylate, tetrahydrofurfuryl(meth)acrylate, butoxyethyl(meth)acrylate, ethoxydiethylene glycol (meth)acrylate, benzyl(meth)acrylate, cyclohexyl(meth)acrylate, phenoxyethyl(meth)acrylate, polyethylene glycol mono(meth)acrylate, polypropylene glycol mono(meth)acrylate, methoxyethylene glycol (meth)acrylate, ethoxyethoxyethyl(meth)acrylate, methoxypolyethylene glycol (meth)acrylate, methoxypolypropylene glycol (meth)acrylate, dicyclopentadiene(meth)acrylate, dicyclopentanyl(meth)acrylate, tricyclodecanyl(meth)acrylate, isobornyl(meth)acrylate, bornyl(meth)acrylate. Similar esters may be derived using fumaric acid and itaconic acid as well.

Additional monomers that can be used include linear 1-olefins (e.g., ethylene or propylene), branched-chain 1-olefins or cyclic olefins (e.g., ethene, propene, butene, isobutene, pentene, cyclopentene, hexene, and cyclohexene); vinyl and allyl alkyl ethers having 1 to 40 carbon atoms in the alkyl radical, wherein the alkyl radical can possibly carry further substituents such as a hydroxyl group, an amino or dialkylamino group, or one or more alkoxylated groups (e.g. methyl vinyl ether, ethyl vinyl ether, propyl vinyl ether, isobutyl vinyl ether, 2-ethylhexyl vinyl ether, vinyl cyclohexyl ether, vinyl 4-hydroxybutyl ether, decyl vinyl ether, dodecyl vinyl ether, octadecyl vinyl ether, 2-(diethylamino)ethyl vinyl ether, 2-(di-n-butylamino)ethyl vinyl ether, methyldiglycol vinyl ether, and the corresponding allyl ethers); sulfo-functional monomers (e.g. allylsulfonic acid, methallylsulfonic acid, styrenesulfonate, vinylsulfonic acid, allyloxybenzenesulfonic acid, 2-acrylamido-2-methylpropanesulfonic acid, and their corresponding alkali metal or ammonium salts, sulfopropyl acrylate and sulfopropyl methacrylate); vinylphosphonic acid, dimethyl vinylphosphonate, and other phosphorus monomers; alkylaminoalkyl (meth)acrylates or alkylaminoalkyl(meth)acrylamides or quaternization products thereof (e.g. 2-(N,N-dimethylamino)ethyl (meth)acrylate, 3-(N,N-dimethylamino)propyl (meth)acrylate, 2-(N,N,N-trimethylammonium)ethyl (meth)acrylate chloride, 2-dimethylaminoethyl(meth)acrylamide, 3-dimethylaminopropyl(meth)acrylamide, and 3-trimethylammoniumpropyl(meth)acrylamide chloride); allyl esters of C1-C30 monocarboxylic acids; N-Vinyl compounds (e.g. N-vinylformamide, N-vinyl-N-methylformamide, N-vinylpyrrolidone, N-vinylimidazole, 1-vinyl-2-methylimidazole, 1-vinyl-2-methylimidazoline, N-vinylcaprolactam, vinylcarbazole, 2-vinylpyridine, and 4-vinylpyridine); monomers containing 1,3-diketo groups (e.g. acetoacetoxyethyl(meth)acrylate or diacetonacrylamide; monomers containing urea groups (e.g. ureidoethyl (meth)acrylate, acrylamidoglycolic acid, and methacrylamidoglycolate methyl ether); and monomers containing silyl groups (e.g. trimethoxysilylpropyl methacrylate).

The monomers can also include one or more crosslinkers such as N-alkylolamides of α,β-monoethylenically unsaturated carboxylic acids having 3 to 10 carbon atoms and esters thereof with alcohols having 1 to 4 carbon atoms (e.g. N-methylolacrylamide and N-methylolmethacrylamide); glyoxal based crosslinkers; monomers containing two vinyl radicals; monomers containing two vinylidene radicals; and monomers containing two alkenyl radicals. Exemplary crosslinking monomers include diesters of dihydric alcohols with α,β-monoethylenically unsaturated monocarboxylic acids, of which in turn acrylic acid and methacrylic acid can be employed. Examples of such monomers containing two non-conjugated ethylenically unsaturated double bonds are alkylene glycol diacrylates and dimethacrylates, such as ethylene glycol diacrylate, 1,3-butylene glycol diacrylate, 1,4-butylene glycol diacrylate and propylene glycol diacrylate, divinylbenzene, vinyl methacrylate, vinyl acrylate, allyl methacrylate, allyl acrylate, diallyl maleate, diallyl fumarate and methylenebisacrylamide. In some embodiments, the crosslinking monomers include alkylene glycol diacrylates and dimethacrylates, and/or divinylbenzene. The crosslinking monomers when used in the binder can be present in an amount of from 0.2% to 5% by weight based on the weight of the total monomer and are considered part of the total amount of monomers used in the binder.

In addition to the crosslinking monomers, small amounts (e.g. from 0.01 to 4% by weight based on the total monomer weight) of molecular weight regulators, such as tert-dodecyl mercaptan, can be present in the binder.

In some embodiments, the unsaturated monomers can include (meth)acrylic acid, itaconic acid, maleic acid, fumaric acid, and crotonic acid. Further monomers are disclosed including styrene, alpha-methylstyrene, methyl (meth)acrylate, ethyl (meth)acrylate, n-butyl (meth)acrylate, isobutyl (meth)acrylate, tert-butyl (meth)acrylate, 2-ethylhexyl (meth)acrylate, vinyl acetate, butadiene, ethylene, (meth)acrylamide, (meth)acrylonitrile, hydroxyethyl (meth)acrylate and glycidyl (meth)acrylate. which can optionally be used.

In some embodiments, the binder can be formed by the reaction product of a polycarboxylic acid (e.g., a polyacrylic acid or polycarboxylic acid modified pure acrylic or styrene acrylic copolymer) and a crosslinker such as a polyol (e.g., glycerol or triethanolamine). The binder can include, for example, a styrene-acrylic polymer modified with a polycarboxylic acid and reacted with a polyol crosslinking agent. Suitable binders include ACRODUR DS 3515, ACRODUR 950L, ACRODUR DS 3558, or combinations thereof. ACRODUR products are commercially available from BASF Corporation. In some embodiments, the polycarboxylic acid and crosslinker can be blended with another latex such as a pure acrylic polymer, a styrene acrylic copolymer, a styrene butadiene copolymer, a vinyl acrylic copolymer, a vinyl acetate polymer, or a vinyl acetate ethylene copolymer.

The binder can be present in an amount that is from 0.1-75%, 5-75%, 5-50%, 10-50%, or 15-50% by weight dry binder relative to the total weight of the composite mat.

The composite mat can have a thickness that is from 0.1 mm to 50 mm, 0.5 mm to 30 mm, 0.25 mm to 5 mm, 0.5 mm to 4 mm, 1 mm to 3 mm, or 1.5 mm to 2 mm thick.

The composite mat can be used as a component of a sandwich construction. A sandwich construction can be characterized by a planar core having a first face and an opposed second face. Each face can be covered by an adjacent composite mat, which can be the same or different on each face of the core. In other embodiments, only one face of the planar core is covered by a composite mat.

In some embodiments, the composite mats can be covered on one or both of the faces opposite the planar core by a thermoplastic polymer film. The thermoplastic polymer film on each face can be the same or may be different. The thermoplastic polymer films can then be covered by a cured clear coat. The clear coat on each face can be the same or may be different.

Although any suitable material can serve as the planar core, in certain embodiments the core contains one or more cellulosic materials. Suitable cellulosic materials include, but are not limited to, bast fibers, wood fibers, including rayon, seed fibers, leaf fibers, fruit fibers and animal fibers. Exemplary bast fibers include kenaf, flax, hemp, and jute. Exemplary seed fibers include cotton. Exemplary leaf fibers include sisal, caroa, and banana. Exemplary fruit fibers include coconut, and exemplary animal fibers include wool.

Suitable thermoplastic films include polyurethanes. The clear coating can be a 100% solids coating, including those having units of oligomeric polyunsaturated compounds such as aliphatic urethane acrylates. The thermoplastic film, the clear coating, or both, can contain one or more additives such as pigments, dyes, flame retardants, hindered amine light stabilizers, ultraviolet light absorbers, and anti-static agents. The thermoplastic film can have a thickness that is from 1-30 mm, 1-20 mm, 2-18 mm, 4-16 mm or 6-12 mm. The clear coat can have a thickness that is from 0.01-0.25 mm, 0.025-0.2 mm or 0.05-0.15 mm.

The sandwich construction can have a total thickness that is between 0.5 - 300 mm, 10-125 mm, 20-100 mm or 20-75 mm. In certain embodiments, the sandwich construction can be characterized in that it contains no free formaldehyde or free styrene. Sandwich constructions that do not contain formaldehyde and/or styrene can include those that do not release formaldehyde and/or styrene, those that do not contain any formaldehyde and/or styrene, and both. In some embodiments, the dispersion can contain a small amount of formaldehyde as a preservative, but the curing mechanism does not involve formaldehyde crosslinking. In some embodiments, styrene can be included in the polymer backbone of the binder, but is not released as free styrene. The sandwich construction can also be characterized by the absence of an adhesive layer between the any of the planar core, composite mats, thermoplastic polymer films, and cured clear coats.

The composite mat can be prepared by blending the acrylic binder with the flame retardant, and applying the mixture to the fiber. Suitable methods for applying the blend include spraying, curtain coating, dip and squeeze, foulard (i.e., the use of foam without pressure), and foaming under pressure. Preferably, the blend is applied to the fibers (e.g., impregnated into the mat) as a foam under pressure, e.g., 0.5 to 5 bar. In contrast to conventional lamination processes, the use of pressurized foam results in the penetration of the binder/additive blend into the fibers. As used herein, the fibers are said to be penetrated when the blend does not exist as a separate layer that is distinct from the fibers. In some cases, the binder/additive blend is impregnated into the fibers. As used herein, the term "impregnated" means that the concentration of the blend and fiber is generally the same throughout the mat so that there is substantially no concentration gradient from one side of the mat to the other.

The blend of the binder and fire resistant additive can also be used for various applications including building materials, furniture, apparel, and a variety of automotive, recreational and household goods.

By way of non-limiting illustration, examples of certain embodiments of the present disclosure are given below. Unless indicated otherwise, parts are parts by weight, temperature is in °C or is at ambient temperature, and pressure is at or near atmospheric.

### Example 1:

### Preparation of Composite Mat

The following composites were prepared by blending resin formulations, foaming the resin, driving the foamed resin into a nonwoven, drying and consolidating to desired thickness. Blending the resin formulations was performed by weighing and combining water, flame retardant(s), foaming agent (Lutensol TDA 10) and pigment to form an intermediate blend, and finally adding Acrodur resin (at 50 wt% solid / 50 wt% water) to create a homogeneous solution/dispersion. The resin blends were then mixed with air under high shear rates to generate a foam using a Hansa foam generator. The foams were then applied to their respective nonwovens using a Hansa foam linear. In this process, the nonwovens were pulled through the foam linear at a constant rate as the foams were applied to the upper and lower sides of the nonwovens in order to promote equal distributions of the resin formulations. The nonwovens were at this stage considered to be impregnated. These impregnated nonwovens were subsequently dried using a radio frequency drier to a moisture content of ~ 15 wt%. Once dried the previously impregnated materials were cut to 61 cm x 80.3 cm (24" x 32") sections to allow for consolidation.

Consolidation was performed using a static hydraulic Dieffenbacher press with flat platens heated to 204.4°C (400°F) with a 5 mm gap. The consolidation durations were set using a thermocouple inserted at the core; the platen gap was maintained for 35 seconds after the core reached 176.7°C (350°F) (i.e. R38 core temp was reached 176.7°C (350°F) at 110 s, therefore total close time was 145 s). The aforementioned processing conditions resulted in high-loft, high-stiffness composites that were formed to 5 mm thickness.

| | A | B | C |
|---|---|---|---|
| Flame Spread Index | 40 | 35 | 25 |
| Smoke Developed Index | 120 | 350 | 250 |
| Fiber weight (g/sm) | 759 | 759 | 656 |
| Resin weight (g/sm) | 303 | 303 | 230 |
| Total FR weight (gsm) | 106 | 102 | 177 |
| Composite weight (gsm) | 1168 | 1164 | 1063 |
| Fiber type | 100% kenaf | 100% kenaf | 70% kenaf, 30% PET |
| Resin type (amount of dry resin as a percentage of starting dry mat) | 40% 950L | 40% 3515L | 17.5% 950L, 17.5% 3515 |
| FR type | 35% Aflammit¹ | 34% Aflammit | 35% Aflammit/40% Polybor² |

| | | | |
|---|---|---|---|
| ¹ Aflammit is a trademark of Thor Specialties (UK) Limited ² Polybor is a trademark of Rio Tinto Group. | | | |

The combustion resistance of the above composite mats was evaluated using the Steiner Tunnel Flame Test (ATSM E84). The results are depicted in the table below.

| | A | B | C |
|---|---|---|---|
| Self Supported | Yes | No | No |
| Steady Ignition Time (s) | 9 | 6 | 21 |
| Max Distance (ft) | 8.20 | 7.94 | 5.06 |
| Time to Max Distance (s) | 139 | 133 | 109 |
| Rate of Flame Increase (ft/s) | 0.063 | 0.063 | 0.058 |
| Receded Distance (ft) | 0.00 | 0.00 | 0.54 |
| Time to Receded Distance (s) | 239 | 272 | 267 |
| Rate of Flame Decrease (ft/s) | -0.082 | -0.057 | -0.029 |
| Flame Spread | 38.95 | 37.36 | 24.05 |
| Area Under Flame Curve (ft/min) | 75.62 | 72.54 | 46.70 |
| Peak Smoke (%Abs.) | 54 | 87 | 48 |
| Time to Peak Smoke | 90 | 90 | 84 |
| Smoke Developed | 121.80 | 345.81 | 233.96 |
| Area Under Smoke Curve (%Abs/min) | 62.12 | 176.36 | 119.32 |
| Self Extinguishing? | Yes | Yes | Yes |

The compositions and methods of the appended claims are not limited in scope by the specific compositions and methods described herein, which are intended as illustrations of a few aspects of the claims and any compositions and methods that are functionally equivalent are intended to fall within the scope of the claims. Various modifications of the compositions and methods in addition to those shown and described herein are intended to fall within the scope of the appended claims. Further, while only certain representative materials and method steps disclosed herein are specifically described, other combinations of the materials and method steps also are intended to fall within the scope of the appended claims, even if not specifically recited. Thus, a combination of steps, elements, components, or constituents may be explicitly mentioned herein; however, other combinations of steps, elements, components, and constituents are included, even though not explicitly stated. The term "comprising" and variations thereof as used herein is used synonymously with the term "including" and variations thereof and are open, non-limiting terms. Although the terms "comprising" and "including" have been used herein to describe various embodiments, the terms "consisting essentially of' and "consisting of' can be used in place of "comprising" and "including" to provide for more specific embodiments and are also disclosed. As used in this disclosure and in the appended claims, the singular forms "a", "an", "the", include plural referents unless the context clearly dictates otherwise.

## Claims

1. A composite mat, comprising:
a) a woven or non-woven cellulosic fiber,
b) a polymeric binder, and
c) a fire resistant additive, in an amount from 0.1-75%, 1-50%, 1-40%, 1-30%, 5-30%, 5-25%, 5-20%, 5-15%, 5-10%, 7.5-15%, 7.5-20% or 10-20% by weight relative to the total weight of the composite mat
wherein the binder and fire resistant additive form a blend, wherein the blend penetrates the fiber and wherein the polymeric binder is formed from at least one α,β-monoethylenically unsaturated mono- or dicarboxylic acid.

2. The composite mat of claim 1 wherein the fiber comprises bast fibers, cotton fibers, wood fibers, leaf fibers, fruit fibers, animal fibers or mixtures thereof.

3. The composite mat of claim 1 or 2 wherein the fiber comprises kenaf, flax, hemp, jute, rayon, sisal, caroa, banana, coconut, wool, rye, wheat, rice, sugar cane, bamboo, or mixtures thereof.

4. The composite mat of any one of claims 1 to 3, wherein the fiber further comprises synthetic fibers-selected from carbon fibers, polyethylenes, polyesters, polyamides, phenol-formaldehydes, polyvinyl chlorides, polyurethanes, and mixtures thereof.

5. The composite mat of any of claims 1 to 4, wherein the fiber comprises polyester.

6. The composite mat of any of claims 1 to 5, wherein the fire resistant additive comprises an organophosphorus compound, a borate salt, a melamine compound, or a mixture thereof.

7. The composite mat of any of claims 1 to 6, wherein the fire resistant additive comprises a borate salt, and the borate salt comprises sodium borate, zinc borate, ammonium borate, boric oxide, or a mixture thereof.

8. The composite mat of any of claims 1 to 7, wherein the fire resistant additive comprises a tetrakis hydroxymethyl phosphonium salt/urea condensate, a cyclic phosphonate, or a mixture thereof.

9. The composite mat of any of claims 1 to 8, wherein the fire resistant additive comprises melamine phosphate, melamine polyphosphate, melamine pyrophosphate, melamine, melamine cyanurate, melamine borate, or a mixture thereof.

10. The composite mat of any of claims 1 to 9, wherein the fire resistant additive comprises a mixture of a borate salt and an organophosphorus compound.

11. The composite mat of any of claims 1 to 10, wherein the binder includes an acrylic polymer formed from styrene, α-methylstyrene, (meth)acrylic acid, itaconic acid, maleic acid, fumaric acid, crotonic acid, methyl (meth)acrylate, ethyl (meth)acrylate, n-butyl (meth)acrylate, isobutyl (meth)acrylate, tert-butyl (meth)acrylate, 2-ethylhexyl (meth)acrylate, vinyl acetate, butadiene, ethylene, (meth)acrylamide, (meth)acrylonitrile, hydroxyethyl (meth)acrylate, glycidyl (meth)acrylate, and mixtures thereof.

12. The composite mat of claim 1, where the fiber comprises non-woven cellulosic bast fibers and the binder is an acrylic binder and is present in the composite mat in an amount from 15% to 50% by weight dry binder, based on the weight of the composite mat.

13. A sandwich construction comprising:
a) a planar core having a first face and an opposed second face, and
b) a first composite mat adjacent to and covering the first face of the planar core and a second composite mat adjacent to and covering the second face of the planar core, the first composite mat and the second composite mat each comprising a composite mat of any one of claims 1 to 12.

14. The sandwich construction of claim 13, further comprising a first thermoplastic polymer film adjacent to and covering the first composite mat and a second thermoplastic polymer film adjacent to and covering the second composite mat.

15. The sandwich construction of claim 13 or 14, further comprising at least one cured clear coat.

16. The sandwich construction of any one of claims 13 to 15, wherein the planar core comprises a cellulosic material.

17. The sandwich construction of any one of claims 13 to 16 which contains no formaldehyde, no styrene, or no adhesive layers between the planar core, the first and second composite mats, the first and second thermoplastic polymer films, and the first and second cured clear coats.

## Patentansprüche

1. Eine Matte aus Verbundmaterial, umfassend:
a) eine gewebte oder nicht gewebte Cellulosefaser,
b) ein polymeres Bindemittel und
c) ein feuerbeständiges Additiv in einer Menge von 0,1-75 Gew.-%, 1-50 Gew.-%, 1-40 Gew.-%, 1-30 Gew.-%, 5-30 Gew.-%, 5-25 Gew.-%, 5-20 Gew.-%, 5-15 Gew.-%, 5-10 Gew.-%, 7,5 bis 15 Gew.-%, 7,5 bis 20 Gew.-% oder 10-20 Gew.-%, bezogen auf das Gesamtgewicht der Matte aus Verbundmaterial, wobei das Bindemittel und das feuerbeständige Additiv eine Mischung bilden, wobei die Mischung die Faser durchdringt und wobei das Polymerbindemittel aus mindestens einer α,β-monoethylenisch ungesättigten Mono- oder Dicarbonsäure gebildet ist.

2. Matte aus Verbundmaterial nach Anspruch 1, wobei die Faser Bastfasern, Baumwollfasern, Holzfasern, Blattfasern, Fruchtfasern, Fasern tierischen Ursprungs oder Gemische davon umfasst.

3. Matte aus Verbundmaterial nach Anspruch 1 oder 2, wobei die Faser umfasst: Kenaf, Flachs, Hanf, Jute, Rayon, Sisal, Caroa, Banane, Kokosnuss, Wolle, Roggen, Weizen, Reis, Zuckerrohr, Bambus oder Mischungen davon.

4. Matte aus Verbundmaterial nach einem der Ansprüche 1 bis 3, wobei die Faser weiterhin synthetische Fasern umfasst, ausgewählt aus Kohlefasern, Polyethylenen, Polyestern, Polyamiden, Phenol-Formaldehyden, Polyvinylchloriden, Polyurethanen und Mischungen davon.

5. Matte aus Verbundmaterial nach einem der Ansprüche 1 bis 4, wobei die Faser Polyester umfasst.

6. Matte aus Verbundmaterial nach einem der Ansprüche 1 bis 5, wobei das feuerbeständige Additiv eine phosphororganische Verbindung, ein Boratsalz, eine Melaminverbindung oder ein Gemisch davon umfasst.

7. Matte aus Verbundmaterial nach einem der Ansprüche 1 bis 6, wobei das feuerbeständige Additiv ein Boratsalz und das Boratsalz Natriumborat, Zinkborat, Ammoniumborat, Boroxid oder eine Mischung davon umfasst.

8. Matte aus Verbundmaterial nach einem der Ansprüche 1 bis 7, wobei das feuerbeständige Additiv ein Tetrakis-Hydroxymethyl-Phosphoniumsalz/Harnstoff-Kondensat, ein cyclisches Phosphonat oder eine Mischung davon umfasst.

9. Matte aus Verbundmaterial nach einem der Ansprüche 1 bis 8, wobei das feuerbeständige Additiv Melaminphosphat, Melaminpolyphosphat, Melaminpyrophosphat, Melamin, Melamincyanurat, Melaminborat oder eine Mischung davon umfasst.

10. Matte aus Verbundmaterial nach einem der Ansprüche 1 bis 9, wobei das feuerbeständige Additiv eine Mischung aus einem Boratsalz und einer phosphororganischen Verbindung umfasst.

11. Matte aus Verbundmaterial nach einem der Ansprüche 1 bis 10, wobei das Bindemittel ein Acrylpolymer aus Styrol, α-Methylstyrol, (Meth)-Acrylsäure, Itaconsäure, Maleinsäure, Fumarsäure, Crotonsäure, Methyl(Meth)-Acrylat, Ethyl(Meth)Acrylat, n-Butyl(Meth)-Acrylat, Isobutyl(Meth)-Acrylat, tert-Butyl(Meth)-Acrylat, 2-Ethylhexyl(Meth)-Acrylat, Vinylacetat, Butadien, Ethylen, (Meth)-Acrylamid, (Meth)-Acrylnitril, Hydroxyethyl(Meth)-Acrylat, Glycidyl(Meth)-Acrylat und Gemischen davon ist.

12. Matte aus Verbundmaterial nach Anspruch 1, wobei die Faser Bastfasern aus nicht gewebtem Zellulosevlies umfasst und wobei das Bindemittel ein Acrylbindemittel ist und in der Matte aus Verbundmaterial in einer Menge von 15 bis 50 Gew.-% des Trockenbindemittels vorhanden ist, basierend auf dem Gewicht der Matte aus Verbundmaterial.

13. Sandwichkonstruktion, umfassend:
a) einen planaren Kern mit einer ersten Fläche und einer gegenüberliegenden zweiten Fläche und
b) eine erste Matte aus Verbundmaterial, neben der ersten Fläche des planaren Kerns und diese abdeckend, und eine zweite Matte aus Verbundmaterial, neben der zweiten Fläche des planaren Kerns und diese abdeckend, wobei die erste Matte aus Verbundmaterial und die zweite Matte aus Verbundmaterial jeweils eine Matte aus Verbundmaterial gemäß einem der folgenden Ansprüche 1 bis 12 umfassen.

14. Sandwichkonstruktion nach Anspruch 13, ferner umfassend einen ersten thermoplastischen Polymerfilm, neben der ersten Matte aus Verbundmaterial und diese abdeckend, und einen zweiten thermoplastischen Polymerfilm, neben der zweiten Matte aus Verbundmaterial und diese abdeckend.

15. Sandwichkonstruktion nach Anspruch 13 oder 14, ferner umfassend mindestens einen gehärteten Klarlack.

16. Sandwichkonstruktion nach einem der Ansprüche 13 bis 15, wobei der planare Kern ein Cellulosematerial umfasst.

17. Sandwichkonstruktion nach einem der Ansprüche 13 bis 16, die kein Formaldehyd, kein Styrol und keine Klebeschichten zwischen dem planaren Kern, der ersten und der zweiten Matte aus Verbundmaterial, dem ersten und dem zweiten thermoplastischen Polymerfilm und der ersten und der zweiten ausgehärteten Klarlackschicht enthält.

## Revendications

1. Tapis composite, comprenant :
a) une fibre cellulosique tissée ou non tissée,
b) un liant polymère et
c) un additif résistant au feu, en une quantité allant de 0,1 à 75 %, de 1 à 50 %, de 1 à 40 %, de 1 à 30 %, de 5 à 30 %, de 5 à 25 %, de 5 à 20 %, de 5 à 15 %, de 5 à 10 %, de 7,5 à 15 %, de 7,5 à 20 % ou de 10 à 20 % en poids par rapport au poids total du tapis composite, le liant et l'additif résistant au feu formant un mélange, le mélange pénétrant dans la fibre et le liant polymère étant formé d'au moins un acide mono- ou dicarboxylique à insaturation α,β-monoéthylénique.

2. Tapis composite selon la revendication 1, dans lequel la fibre comprend des fibres libériennes, des fibres de coton, des fibres de bois, des fibres de feuilles, des fibres de fruits, des fibres animales ou leurs mélanges.

3. Tapis composite selon la revendication 1 ou la revendication 2, dans lequel la fibre comprend celle du kénaf, du lin, du chanvre, du jute, de la rayonne, du sisal, du caroa, de la banane, de la noix de coco, de la laine, du seigle, du blé, du riz, de la canne à sucre, du bambou ou de leurs mélanges.

4. Tapis composite selon l'une quelconque des revendications 1 à 3, dans lequel la fibre comprend en outre les fibres synthétiques, sélectionnées parmi les fibres de carbone, les polyéthylènes, les polyesters, les polyamides, les phénol-formaldéhydes, les poly(chlorure de vinyle), les polyuréthannes et leurs mélanges.

5. Tapis composite selon l'une quelconque des revendications 1 à 4, dans lequel la fibre comprend du polyester.

6. Tapis composite selon l'une quelconque des revendications 1 à 5, dans lequel l'additif résistant au feu comprend un composé organophosphoré, un sel de borate, un composé de mélamine ou un mélange de ceux-ci.

7. Tapis composite selon l'une quelconque des revendications 1 à 6, dans lequel l'additif résistant au feu comprend un sel de borate et où le sel de borate comprend du borate de sodium, du borate de zinc, du borate d'ammonium, de l'oxyde borique ou un mélange de ceux-ci.

8. Tapis composite selon l'une quelconque des revendications 1 à 7, dans lequel l'additif résistant au feu comprend un condensat de sel / d'urée de tétrakis hydroxyméthyl phosphonium, un phosphonate cyclique ou un mélange de ceux-ci.

9. Tapis composite selon l'une quelconque des revendications 1 à 8, dans lequel l'additif résistant au feu comprend du phosphate de mélamine, du polyphosphate de mélamine, du pyrophosphate de mélamine, de la mélamine, du cyanurate de mélamine, du borate de mélamine ou un mélange de ceux-ci.

10. Tapis composite selon l'une quelconque des revendications 1 à 9, dans lequel l'additif résistant au feu comprend un mélange d'un sel de borate et d'un composé organophosphoré.

11. Tapis composite selon l'une quelconque des revendications 1 à 10, dans lequel le liant comprend un polymère acrylique formé de styrène, d'a-méthylstyrène, d'acide (méth)acrylique, d'acide itaconique, d'acide maléique, d'acide fumarique, d'acide crotonique, de (méth)acrylate de méthyle, de (méth)acrylate d'éthyle, de (méth)acrylate de n-butyle, de (méth)acrylate d'isobutyle, de (méth)acrylate de tert-butyle, de (méth)acrylate de 2-éthylhexyle, d'acétate de vinyle, de butadiène, d'éthylène, de (méth)acrylamide, de (méth)acrylonitrile, de (méth)acrylate d'hydroxyéthyl, de (méth)acrylate de glycidyle et de leurs mélanges.

12. Tapis composite de la revendication 1, dans lequel la fibre comprend des fibres cellulosiques non tissées et où le liant est un liant acrylique et est présent dans le tapis composite en une quantité allant de 15 % à 50 % en poids de liant sec, par rapport au poids du tapis composite.

13. Construction en sandwich comprenant :
a) un noyau plan ayant une première face et une seconde face opposée et
b) un premier tapis composite, adjacent à la première face du noyau plan et recouvrant celle-ci, et un second tapis composite, adjacent à la seconde face du noyau plan et recouvrant celle-ci, le premier tapis composite et le second tapis composite comprenant chacun un tapis composite selon l'une quelconque des revendications 1 à 12.

14. Construction en sandwich selon la revendication 13, comprenant en outre un premier film de polymère thermoplastique, adjacent à la première nappe composite et recouvrant celle-ci, et un second film de polymère thermoplastique, adjacent à la seconde nappe composite et recouvrant celle-ci.

15. Construction en sandwich selon la revendication 13 ou la revendication 14, comprenant en outre au moins une couche transparente durcie.

16. Construction en sandwich selon l'une quelconque des revendications 13 à 15, dans laquelle le noyau plan comprend une matière cellulosique.

17. Construction en sandwich selon l'une quelconque des revendications 13 à 16, qui ne contient ni formaldéhyde, ni styrène ni couches adhésives entre le noyau plan, les premier et second mats composites, les premier et second films de polymère thermoplastique et les première et seconde couches transparentes durcies.
